# EUROPEAN PATENT SPECIFICATION

(11) **EP 4 099 069 B1**
(45) Date of publication and mention of the grant of the patent: **02.12.2026**
(21) Application number: 22176000.2
(22) Date of filing: 30.05.2022
(51) Int. Cl.: G02B 6/38

(54) **OPTICAL FIBER CONNECTOR ASSEMBLY**
GLASFASERVERBINDERANORDNUNG
ENSEMBLE CONNECTEUR DE FIBRES OPTIQUES

(30) Priority: 31.05.2021 CN 202121190157 U
(43) Date of publication of application: 07.12.2022
(60) Divisional application: 25196999.4 / 4 628 958
(73) Proprietor: Acon Optics Communications Inc., New Taipai City (TW)
(72) Inventor: CUI, Yangyang, New Taipei City (TW); ZHANG, Rui, New Taipei City (TW)
(74) Representative: Becker, Eberhard

(56) References cited:
- CN-A- 102 269 846
- CN-U- 208 818 875
- DE-A1- 2 939 231
- JP-U- 3 223 844
- US-A1- 2004 017 983

## Description

### BACKGROUND

### Technical Field

The disclosure relates to a connector assembly, and in particular relates to an optic fiber connector assembly.

### Description of Related Art

Due to the advantages of high bandwidth and low loss, optic fiber has been widely used as a signal transmission medium in recent years. Therefore, with the expansion of optical communication network technology, wide area networks such as the internet and the intranet have become popular, and at the same time, communication flow has been improved.

Generally speaking, a typical optic fiber connector is composed of a matching female adapter and male optic fiber connector. The female adapter is disposed in the electronic device, and the male optic fiber connector is plugged into the female adapter to establish a connection, so as to achieve the purpose of locking and data transmission at the same time. However, the current situation is that, with the development of technology, due to a relatively large structural size and high spacing ratio, these products often cannot effectively reduce the optical path spacing, and cannot meet the requirements of 5G communication for wiring density. US 2004/017983 A1 relates to a fiber optic connector module including a ferrule terminated to at least one optical fiber.

### SUMMARY

The invention is set out in the appended set of claims. The following disclosure serves a better understanding of the present invention. The disclosure provides an optic fiber connector assembly, and an adapter and a connector of the optic fiber connector assembly are adapted to each other through the structural outline to achieve the effect of mutual fixation.

The optic fiber connector assembly of the disclosure includes at least one adapter and at least one connector. The adapter is correspondingly connected to the at least one connector. The adapter includes a first housing, at least one sleeve, at least one bridging portion, and at least one locking arm. The sleeve is disposed in the first housing. The bridging portion extends out of a side of the first housing, the sleeve extends from an inside of the first housing to the corresponding bridging portion, and the locking arm extends from the side and is located next to the bridging portion. The connector includes a second housing, a ferrule, and a spring. The ferrule is disposed in the second housing in a penetrating manner, and the spring is abutted between the second housing and the ferrule. The second housing is sleeved onto the bridging portion, the ferrule is inserted into the sleeve, and the locking arm is buckled onto the second housing.

The ferrule is divided into an A portion, a B portion, and a C portion along the axis. The A portion is configured to accommodate an optic fiber core and is inserted into the sleeve, the B portion is located between the A portion and the C portion, the B portion is locked onto an accommodating groove in the second housing, the C portion extends from the B portion and is located in the accommodating groove, and the spring is sleeved onto the C portion and is abutted between the B portion and the accommodating groove.

In an embodiment of the disclosure, the ferrule further has a D portion and an E portion. The D portion is connected between the A portion and the B portion and the D portion is configured to abut the bridging portion, and the C portion is connected between the B portion and the E portion. The second housing also has a lip portion located outside the accommodating groove, and the E portion is located outside the second housing and is locked onto the lip portion.

In an embodiment of the disclosure, the ferrule includes a first structure body and a second structure body. The second structure body is sleeved onto a portion of the first structure body. The first structure body has the A portion, and the second structure body has the B portion, the C portion, the D portion, and the E portion.

In an embodiment of the disclosure, an elastic force applied by the spring to the B portion is offset by locking the E portion onto the lip portion.

In an embodiment of the disclosure, the B portion and the accommodating groove are polygonally adapted to each other for mutual fixation, preventing the ferrule and the second housing from rotating relative to each other along the axis.

In an embodiment of the disclosure, the second housing forms an elastic arm structure outside the accommodating groove, and the second housing also has a locking step located on the elastic arm structure. The locking arm is suitable for buckling onto the locking step.

Based on the above, the optic fiber connector assembly is composed of the adapter and the connector. The adapter is suitable for correspondingly connecting at least one connector, that is, multiple connectors can be docked and integrated into the same adapter with the structure illustrated below, and in order to facilitate the fixation effect of the optic fiber core wire, the bridging portion of the adapter and the ferrule of the connector refer to an outline that adapts to each other, so that the inner wall of the second housing of the connector and the outer wall of the bridging portion of the adapter are docked together in a polygonally adapted structure, thereby achieving the required effect of mutual fixation and also preventing the connector and the adapter from rotating relative to each other.

### BRIEF DESCRIPTION OF THE DRAWING

FIG. 1 is a schematic view of an optic fiber connector assembly according to an embodiment of the disclosure.
FIG. 2 is a schematic view of an assembly of the optic fiber connector assembly of FIG. 1.
FIG. 3 is an exploded view of a connector.
FIG. 4 is a partial cross-sectional view of a optic fiber connector assembly.
FIG. 5 is an exploded view of an adapter.
FIG. 6 is a schematic view of a combination of multiple adapters.

### DETAILED DESCRIPTION OF DISCLOSED EMBODIMENTS

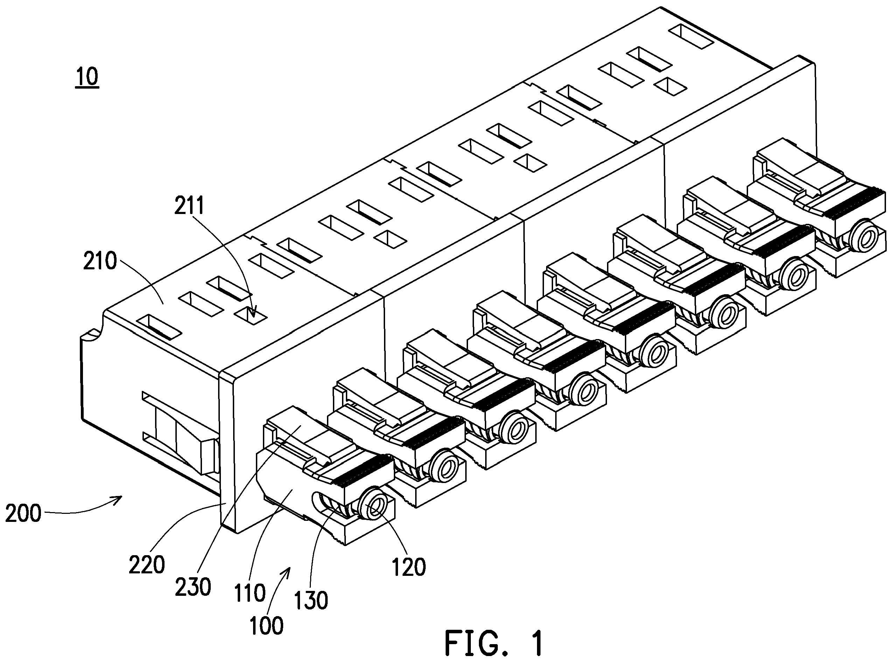

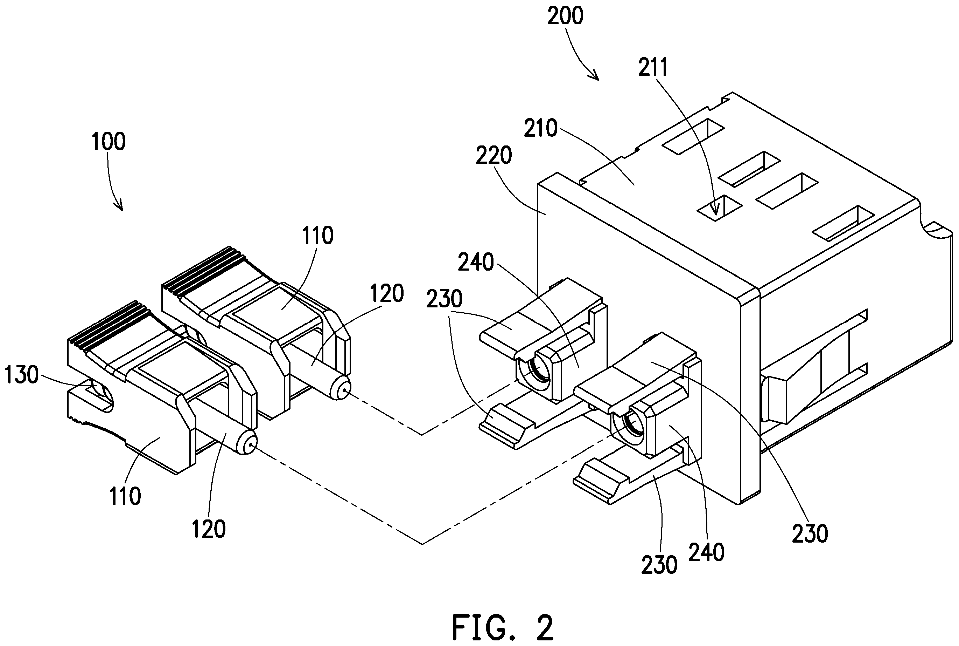

FIG. 1 is a schematic view of an optic fiber connector assembly according to an embodiment of the disclosure. FIG. 2 is a schematic view of an assembly of the optic fiber connector assembly of FIG. 1. Referring to FIG. 1 and FIG. 2 at the same time, an optic fiber connector assembly 10 of the disclosure includes at least one adapter 200 and at least one connector 100, wherein the adapter 200 is correspondingly connected to at least one connector 100. In the multiple combined adapters 200 and connectors 100 shown here, it is exemplified that one adapter 200 is correspondingly connected to two connectors 100.

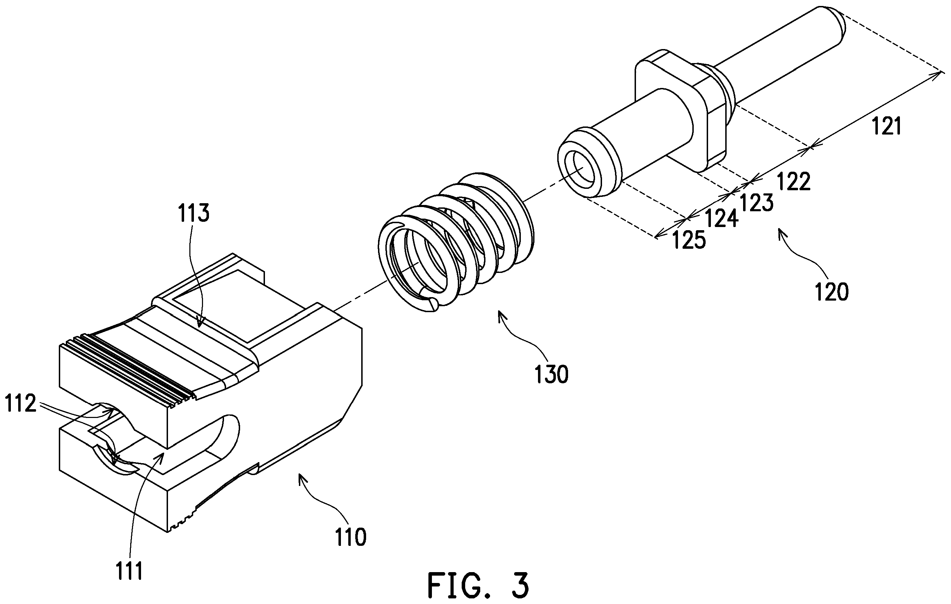

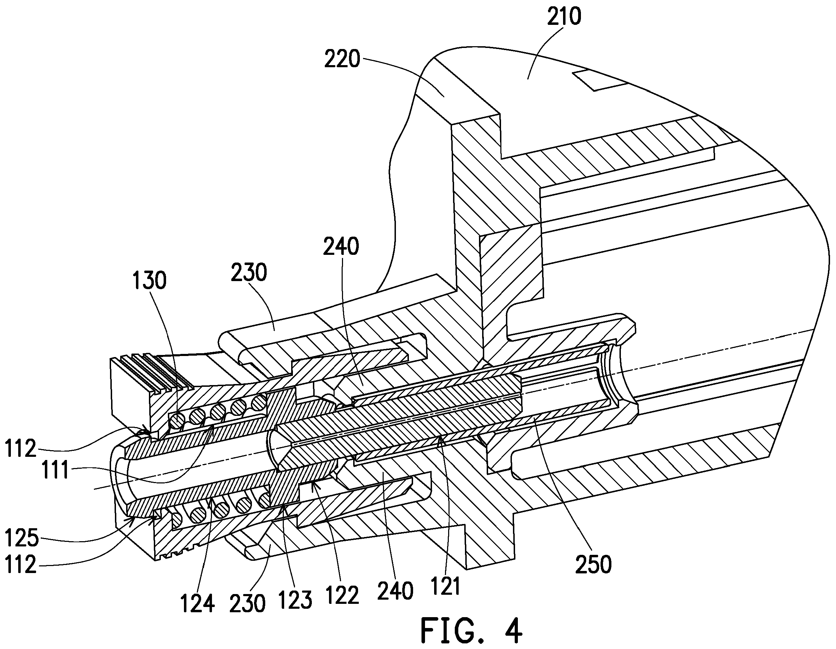

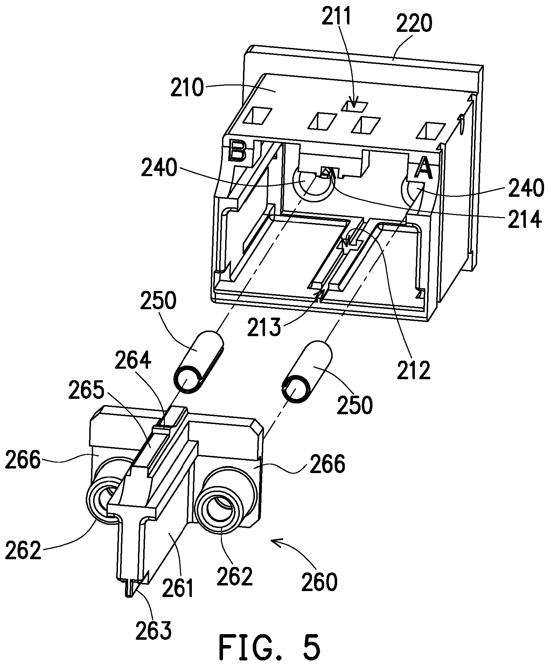

FIG. 3 is an exploded view of a connector. Referring to FIG. 2 and FIG. 3 at the same time, the connector 100 includes a second housing 110, a ferrule 120, and a spring 130. The ferrule 120 is disposed in the second housing 110 in a penetrating manner, and the spring 130 is abutted between the second housing 110 and the ferrule 120. FIG. 4 is a partial cross-sectional view of a optic fiber connector assembly. FIG. 5 is an exploded view of an adapter. Referring to FIG. 3 to FIG. 5 at the same time, the adapter 200 of the embodiment includes a first housing 210, at least one sleeve 250 (two sleeves 250 are illustrated herein as an example), at least one bridging portion 240 (two bridging portions 240 are illustrated herein as an example), and at least one locking arm 230 (each of the bridging portions 240 adjoining a pair of the locking arms 230 are illustrated herein as an example). As shown in FIG. 5, the sleeves 250 are disposed in the first housing 210. As shown in FIG. 2 and FIG. 4, the bridging portion 240 extends from one side of the first housing 210, the sleeve 250 extends from the first housing 210 to the corresponding bridging portion 240, and the locking arms 230 extend from the side and are located next to the bridging portion 240, that is, the locking arms 230 are on the same side as the bridging portion 240.

As shown in FIG. 2 and FIG. 4, when the adapter 200 is connected to the connector 100 along an axis (such as a dash-dotted line in the figures), the second housings 110 are sleeved onto the bridging portions 240, the ferrules 120 are inserted into the sleeves 250, and the locking arms 230 are buckled onto the second housings 110. An inner wall of the second housing 110 and an outer wall of the bridging portion 240 are polygonally (shown as a quadrilateral in the embodiment) adapted to each other for mutual fixation, preventing the connector 100 and the adapter 200 from rotating relative to each other along the axis and affecting the fixation effect of the optic fiber core wire.

Further, referring to FIG. 2 to FIG. 4 again, the ferrule 120 of the embodiment is divided into an A portion 121, a B portion 123, and a C portion 124 along the axis. The A portion 121 is configured to accommodate the optic fiber core and is inserted into the ferrule 250, the B portion 123 is located between the A portion 121 and the C portion 124, the B portion 123 is locked onto an accommodating groove 111 in the second housing 110, the C portion 124 extends from the B portion 123 and is located in the accommodating groove 111, and the spring 130 is sleeved onto the C portion 124 and is abutted between the B portion 123 and the accommodating groove 111. Here, the B portion 123 and the accommodating groove 111 are polygonally (shown as a quadrilateral in the embodiment) adapted to each other for mutual fixation, preventing the ferrules 120 and the second housings 110 from rotating relative to each other along the axis.

It should be mentioned that, whether it is the ferrule 120 and the second housing 110 or the second housing 110 of the connector 100 and the bridging portion 240 of the adapter 200, the reason for adopting a quadrilateral adapting outline is that in order to prevent rotation relative to each other along the axis, the quadrilateral adapting outline is a preferred embodiment of the disclosure because the required torque is the maximum.

Furthermore, the ferrule 120 of the embodiment also has a D portion 122 and an E portion 125. The D portion 122 is connected between the A portion 121 and the B portion 123 and the D portion is configured to abut the bridging portion 240, the C portion 124 is connected between the B portion 123 and the E portion 125. The second housing 110 also has lip portions 112 located outside the accommodating groove 111, and the E portion 125 penetrates out of the second housing 110 and is locked onto the lip portions 112. It can be clearly seen from FIG. 4 that the spring 130 located in the accommodating groove 111 exerts a rightward elastic force on the ferrule 120 as shown in FIG. 4 due to the above-mentioned abutting structural relationship, that is, the spring 130 exerts a rightward elastic force on the B portion 123. However, by locking the E portion 125 onto the lip portions 112, the rightward elastic force can be stopped and offset, so that the ferrule 120 and the spring 130 can be stably disposed in the second housing 110. Here, since the outer diameter of the outline of the E portion 125 is larger than that of the C portion 124, the E portion 125 can be smoothly locked onto the outside of the second housing 110.

It should also be noted that, as shown in FIG. 4, in terms of structure, the ferrule 120 of the embodiment includes a first structure body and a second structure body, wherein the second structure body is sleeved onto a portion of the first structure body. Here, the first structure body has an A portion 121, and the second structure body has a B portion 123, a C portion 124, a D portion 122, and an E portion 125.

In addition, for the connector 100, the second housing 110 is formed with upper and lower elastic arm structures outside the accommodating groove 111, and the second housing 110 also has a locking step 113 located on the elastic arm structure, so that when the connector 100 and the adapter 200 are correspondingly connected, the locking arm 230 of the adapter 200 can be buckled onto the locking step 113, and once the user wants to separate the connector 100 from the adapter 200, the locking step 113 can be withdrawn from the locking arm 230 by pressing with force against the elastic arm structure.

Next, referring to FIG. 2, FIG. 4, and FIG. 5, the adapter 200 of the embodiment further includes a longitudinal plate 220 and at least one partitioning member 260. The first housing 210 is located on one side of the longitudinal plate 220, and the bridging portions 240 and the locking arms 230 are located on the other side of the longitudinal plate 220. The partitioning member 260 is configured to separate multiple sleeves 250 that correspond to each other. That is, the partitioning member 260 is detachably assembled in the first housing 210, so that there can be a partitioning member 260 between two adjacent sleeves 250.

Further, the partitioning member 260 of the embodiment is a T-shaped structure body, which includes a partitioning plate 261 and a pair of wing portions 266 located on opposite sides of the partitioning plate 261, wherein the partitioning plate 261 has first ribs 263 and 265 and a first protrusion 264, and the first housing 210 has first guide grooves 213 and 214 and openings 211 and 212. The T-shaped structure body is moved into the first housing 210 by matching the first ribs 263 and 265 and the first guide grooves 213 and 214, and the T-shaped structure body is fixed in the first housing 210 by snapping the first protrusion 264 onto the openings 211 and 212. In addition, the partitioning member 260 also has a pair of clamping tubes 262 extending from the wing portions 266, corresponding to the bridging portions 240 respectively, so that the sleeves 250 can be stably accommodated and fixed on the clamping tubes 262 and the bridging portions 240 of the adapter 200.

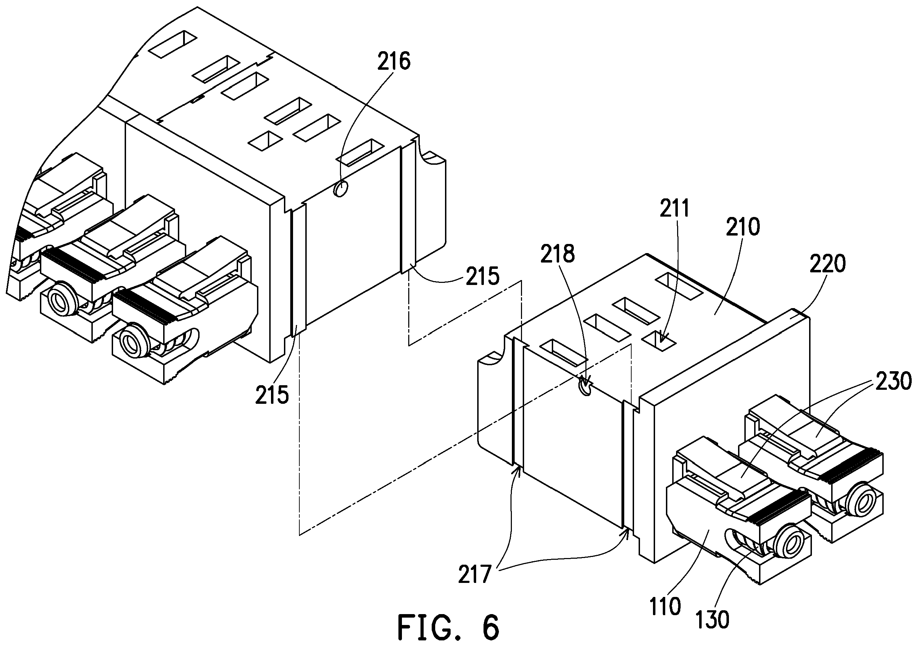

FIG. 6 is a schematic view of a combination of multiple adapters. Referring to FIG. 1 and FIG. 6 at the same time, in the embodiment, in two adjacent adapters 200, one of the adapters 200 includes second ribs 215 disposed on the side wall of the first housing 210, and the other adapter 200 includes second guide grooves 217 disposed on the side wall of the first housing 210. By matching the second ribs 215 and the second guide grooves 217, two adjacent adapters 200 can be guided and slidably connected together. At the same time, one of the adapters 200 also has a second protrusion 216 located on the side wall, and the other adapter 200 also has a slot 218 located on the side wall, so as to provide a stopping and locking mechanism for the above-mentioned guiding and slidable connection process, that is, the second protrusion 216 is snapped onto the slot 218, so that two adjacent adapters 200 can be fixed together, and at the same time, the adapter 200 can be restricted to be assembled or disassembled only in a single direction.

To sum up, in the above-mentioned embodiments of the disclosure, the adapter and the connector of the optic fiber connector assembly can be adapted through the structural outline and the effect of mutual fixation is achieved, that is, the mutually adapted structures are polygonal (quadrilateral) along the square plane of the assembly axis of the two (the connector and the adapter), so that the adapted structures interfere to prevent rotation, and thus the required fixation effect when docking the optic fiber is provided.

At the same time, by matching the rib and the guide groove between adjacent adapters to each other, the user can splice adapters one by one according to requirements, so as to achieve the effect of integrating the optic fiber connector assembly, wherein on the mutually adjoining side walls, the two adapters are locked to each other by the protrusion and the slot, and the adapter can be assembled and disassembled only in a single direction, thereby improving the structural stability when the adapters are spliced.

## Claims

1. An optic fiber connector assembly (10), comprising:
at least one adapter (200), comprising:
a first housing (210);
at least one sleeve (250), disposed in the first housing (210);
at least one bridging portion (240), extending out of a side of the first housing (210), the sleeve (250) extending from an inside of the first housing (210) to the corresponding bridging portion (240); and
at least one locking arm (230), extending from the side and located next to the bridging portion (240); and
at least one connector (100), comprising:
a second housing (110);
a ferrule (120), disposed in the second housing (110) in a penetrating manner; and
a spring (130), abutted between the second housing (110) and the ferrule (120),
wherein the adapter (200) is suitable for correspondingly connecting the at least one connector (100),
when the adapter (200) is connected to the connector (100) along an axis, the second housing (110) is sleeved onto the bridging portion (240), the ferrule (120) is inserted into the sleeve (250), and the locking arm (230) is buckled onto the second housing (110),
the optic fiber connector assembly (10) **characterized in that**
the ferrule (120) is divided into an A portion (121), a B portion (123), and a C portion (124) along the axis, the A portion (121) is configured to accommodate an optic fiber core and is inserted into the sleeve (250), the B portion (123) is located between the A portion (121) and the C portion (124), the B portion (123) is locked onto an accommodating groove (111) in the second housing (110), the C portion (124) extends from the B portion (123) and is located in the accommodating groove (111), and the spring (130) is sleeved onto the C portion (124) and abutted between the B portion (123) and the accommodating groove (111).

2. The optic fiber connector assembly (10) according to claim 1, wherein the ferrule (120) further has a D portion (122) and an E portion (125), the D portion (122) is connected between the A portion (121) and the B portion (123) and the D portion (122) is configured to abut the bridging portion (240), the C portion (124) is connected between the B portion (123) and the E portion (125), the second housing (110) also has a lip portion (112) located outside the accommodating groove (111), and the E portion (125) is located outside the second housing (110) and is locked onto the lip portion (112).

3. The optic fiber connector assembly (10) according to claim 2, wherein the ferrule (120) comprises a first structure body and a second structure body, the second structure body is sleeved onto a portion of the first structure body, the first structure body has the A portion (121), and the second structure body has the B portion (123), the C portion (124), the D portion (122), and the E portion (125).

4. The optic fiber connector assembly (10) according to claim 2 or 3, wherein an elastic force applied by the spring (130) to the B portion (123) is offset by locking the E portion (125) onto the lip portion (112).

5. The optic fiber connector assembly (10) according to any one of claims 1 to 4, wherein a cross-section profile of the B portion (123) and a cross-section profile of the accommodating groove (111) are two polygons adapted to each other for mutual fixation and to prevent the ferrule and the second housing from relatively rotating about the axis.

6. The optic fiber connector assembly (10) according to any one of claims 1 to 5, wherein the second housing (110) forms an elastic arm structure outside the accommodating groove (111), the second housing (110) also has a locking step (113) located on the elastic arm structure, and the locking arm (230) is suitable for buckling onto the locking step (113).

## Patentansprüche

1. Lichtwellenleiter-Verbinder-Baugruppe (10), die umfasst:
mindestens einen Adapter (200), umfassend:
ein erstes Gehäuse (210);
mindestens eine Hülse (250), die in dem ersten Gehäuse (210) angeordnet ist;
mindestens einen Brückenabschnitt (240), der sich aus einer Seite des ersten Gehäuses (210) heraus erstreckt, wobei sich die Hülse (250) von einem Inneren des ersten Gehäuses (210) zu dem entsprechenden Brückenabschnitt (240) erstreckt; und
mindestens einen Verriegelungsarm (230), der sich von der Seite aus erstreckt und neben dem Brückenabschnitt (240) angeordnet ist; sowie
mindestens einen Verbinder (100), der umfasst:
ein zweites Gehäuse (110);
eine Hülse (120), die durchsteckend in dem zweiten Gehäuse (110) angeordnet ist; und
eine Feder (130), die zwischen dem zweiten Gehäuse (110) und der Hülse (120) anliegt,
wobei der Adapter (200) dazu geeignet ist, den mindestens einen Verbinder (100) entsprechend zu verbinden,
wenn der Adapter (200) entlang einer Achse mit dem Verbinder (100) verbunden ist, das zweite Gehäuse (110) auf den Brückenabschnitt (240) aufgeschoben ist, die Hülse (120) in die Hülse (250) eingeführt ist und der Verriegelungsarm (230) am zweiten Gehäuse (110) verriegelt ist,
wobei die Lichtwellenleiter-Verbinder-Baugruppe (10) **dadurch gekennzeichnet ist, dass** die Hülse (120) entlang der Achse in einen A-Abschnitt (121), einen B-Abschnitt (123) und einen C-Abschnitt (124) unterteilt ist, der A-Abschnitt (121) zum Konfigurieren eines Lichtwellenleiterkerns ausgebildet ist und in die Hülse (250) eingeführt ist, der B-Abschnitt (123) zwischen dem A-Abschnitt (121) und dem C-Abschnitt (124) angeordnet ist, der B-Abschnitt (123) in einer Aufnahmenut (111) in dem zweiten Gehäuse (110) verriegelt ist, der C-Abschnitt (124) sich von dem B-Abschnitt (123) aus erstreckt und sich in der Aufnahmenut (111) befindet, und die Feder (130) auf den C-Abschnitt (124) aufgeschoben ist und zwischen dem B-Abschnitt (123) und der Aufnahmenut (111) anliegt.

2. Lichtwellenleiter-Verbinder-Baugruppe (10) nach Anspruch 1, wobei die Hülse (120) ferner einen D-Abschnitt (122) und einen E-Abschnitt (125) aufweist, der D-Abschnitt (122) zwischen dem A-Abschnitt (121) und dem B-Abschnitt (123) verbunden ist und der D-Abschnitt (122) konfiguriert ist, dass er an dem Brückenabschnitt (240) anliegt,
der C-Abschnitt (124) mit dem B-Abschnitt (123) und dem E-Abschnitt (125) verbunden ist, das zweite Gehäuse (110) zudem einen außerhalb der Aufnahmenut (111) angeordneten Lippenabschnitt (112) aufweist und der E-Abschnitt (125) außerhalb des zweiten Gehäuses (110) angeordnet ist und an dem Lippenabschnitt (112) verriegelt ist.

3. Lichtwellenleiter-Verbinder-Baugruppe (10) nach Anspruch 2, wobei die Hülse (120) einen ersten Körper und einen zweiten Körper umfasst, der zweite Körper auf einen Abschnitt des ersten Körpers aufgeschoben ist, der erste Körper den A-Abschnitt (121) aufweist und der zweite Körper den B-Abschnitt (123), den Abschnitt C (124), den Abschnitt D (122) und den Abschnitt E (125) aufweist.

4. Lichtwellenleiter-Verbinder-Baugruppe (10) nach Anspruch 2 oder 3, wobei eine von der Feder (130) auf den Abschnitt B (123) ausgeübte Federkraft durch das Verriegeln des Abschnitts E (125) an dem Lippenabschnitt (112) ausgeglichen ist.

5. Lichtwellenleiter-Verbinder-Baugruppe (10) nach einem der Ansprüche 1 bis 4, wobei ein Querschnittsprofil des B-Abschnitts (123) und ein Querschnittsprofil der Aufnahmenut (111) zwei zueinander angepasste Polygone sind, um eine gegenseitige Fixierung zu gewährleisten und eine relative Drehung der Hülse und des zweiten Gehäuses um die Achse zu verhindern.

6. Lichtwellenleiter-Verbinder-Baugruppe (10) gemäß einem der Ansprüche 1 bis 5, wobei das zweite Gehäuse (110) außerhalb der Aufnahmenut (111) eine elastische Armkonstruktion bildet, das zweite Gehäuse (110) weiter eine an der elastischen Armkonstruktion angeordnete Verriegelungsstufe (113) aufweist und der Verriegelungsarm (230) angepasst ist, auf die Verriegelungsstufe (113) einrasten zu lassen.

## Revendications

1. Ensemble de connecteur à fibre optique (10), comprenant :
au moins un adaptateur (200), comprenant :
un premier boîtier (210) ;
au moins un manchon (250), disposé dans le premier boîtier (210) ;
au moins une partie de pontage (240), s'étendant hors d'un côté du premier boîtier (210), le manchon (250) s'étendant depuis l'intérieur du premier boîtier (210) jusqu'à la partie de pontage correspondante (240) ; et
au moins un bras de verrouillage (230), s'étendant depuis le côté et situé à proximité de la partie de pontage (240) ; et
au moins un connecteur (100), comprenant :
un deuxième boîtier (110) ;
une ferrule (120), disposée dans le deuxième boîtier (110) de manière à le traverser ; et
un ressort (130), pris en appui entre le deuxième boîtier (110) et la ferrule (120), dans lequel l'adaptateur (200) est adapté est adapté pour être raccordé de manière correspondante l'au moins un connecteur (100),
lorsque l'adaptateur (200) est raccordé au connecteur (100) le long d'un axe, le deuxième boîtier (110) est emboîté sur la partie de pontage (240), la ferrule (120) est insérée dans le manchon (250), et le bras de verrouillage (230) est verrouillé sur le deuxième boîtier (110),
l'ensemble de connecteur à fibre optique (10) est **caractérisé en ce que**
la ferrule (120) est divisée en une partie A (121), une partie B (123) et une partie C (124) le long de l'axe, la partie A (121) est configurée pour recevoir un cœur de fibre optique et est insérée dans le manchon (250), la partie B (123) est située entre la partie A (121) et la partie C (124), la partie B (123) est verrouillée dans une rainure de logement (111) du deuxième boîtier (110), la partie C (124) s'étend à partir de la partie B (123) et est située dans la rainure de logement (111), et le ressort (130) est enfilé sur la partie C (124) et prend appui entre la partie B (123) et la rainure de logement (111).

2. Ensemble de connecteur à fibre optique (10) selon la revendication 1, dans lequel la ferrule (120) comporte en outre une partie D (122) et une partie E (125), la partie D (122) est reliée entre la partie A (121) et la partie B (123) et la partie D (122) est configurée pour venir en butée contre la partie de pontage (240),
la partie C (124) est reliée entre la partie B (123) et la partie E (125), le deuxième boîtier (110) comporte également une partie formant lèvre (112) située à l'extérieur de la rainure de logement (111), et la partie E (125) est située à l'extérieur du deuxième boîtier (110) et est verrouillée sur la partie formant lèvre (112).

3. Ensemble de connecteur à fibre optique (10) selon la revendication 2, dans lequel la ferrule (120) comprend un premier corps structurel et un deuxième corps structurel, le deuxième corps structurel est emboîté sur une partie du premier corps structurel, le premier corps structurel comporte la partie A (121), et le deuxième corps structurel comporte la partie B (123), la partie C (124), la partie D (122) et la partie E (125).

4. Ensemble de connecteur à fibre optique (10) selon la revendication 2 ou 3, dans lequel une force élastique appliquée par le ressort (130) à la partie B (123) est compensée par le verrouillage de la partie E (125) sur la partie formant lèvre (112).

5. Ensemble de connecteur à fibre optique (10) selon l'une quelconque des revendications 1 à 4, dans lequel le profil en coupe transversale de la partie B (123) et le profil en coupe transversale de la rainure de logement (111) sont deux polygones adaptés l'un à l'autre pour assurer une fixation mutuelle et empêcher la ferrule et le deuxième boîtier de tourner l'un par rapport à l'autre autour de l'axe.

6. Ensemble de connecteur à fibre optique (10) selon l'une quelconque des revendications 1 à 5, dans lequel le deuxième boîtier (110) forme une structure de bras élastique à l'extérieur de la rainure de logement (111), le deuxième boîtier (110) comporte également un épaulement de verrouillage (113) situé sur la structure de bras élastique, et le bras de verrouillage (230) est adapté pour s'encliqueter sur l'épaulement de verrouillage (113).
